# EUROPEAN PATENT SPECIFICATION

(11) **EP 2 575 425 B1**
(45) Date of publication and mention of the grant of the patent: **13.12.2017**
(21) Application number: 11723376.7
(22) Date of filing: 18.05.2011
(51) Int. Cl.: A01G 7/00

(54) **POD SEALING METHOD**
VERFAHREN ZUR HÜLSENVERSIEGELUNG
PROCÉDÉ DE SCELLEMENT DE COSSES

(30) Priority: 25.05.2010 IT VA20100045
(43) Date of publication of application: 10.04.2013
(73) Proprietor: Lamberti SpA, 21041 Albizzate (IT)
(72) Inventor: BOHUS, Peter, H-8000 Székesfehérvár (HU); DI MODUGNO, Rocco, I-20034 Giussano (MB) (IT); CHIAVACCI, Dario, I-21040 Castronno (VA) (IT); FLORIDI, Giovanni, I-28100 Novara (IT); LI BASSI, Giuseppe, I-21026 Gavirate (VA) (IT)
(74) Representative: Giaroni, Paola
(86) International application number: PCT/EP2011/058024
(87) International publication number: WO 2011/147721

(56) References cited:
- WO-A1-2005/012540
- US-A- 4 447 984

## Description

### Technical Field

The present invention relates to a method for reducing the seed loss due to pod-shattering using an aqueous pod sealant composition comprising a low viscosity carboxymethyl cellulose.

This invention also pertains to the use of low viscosity carboxymethyl cellulose in diluted spray compositions as pod sealant.

### Background Art

Pod shattering, also called seed shattering, is an important agronomic trait because it affects harvest yield.

Pod shattering is the dispersion of seeds which occurs through a process of dehiscence.

In many agricultural seed products such as oilseed crops, grains and legumes, as well as seed for planting, premature dehiscence prior to harvest or release of seeds during the mechanical harvest results in serious losses. Under adverse conditions, such as very windy conditions, which is not all that uncommon during the harvesting time, as much as half of the crop ends up on the ground. This is particularly true for oilseed rape.

Visual examination of the crops and other agricultural techniques such as determination of moisture content have been the primary means to indicate best timing for the seed harvest.

Attempts to solve the problem of pod shattering and early fruit dehiscence over the past 20 years have focused on the breeding of shatter-resistant varieties. However, these plant hybrids are frequently sterile and loose favorable characteristics that must be regained by backcrossing, which is both time-consuming and laborious. To date a simple method for producing genetically modified plants that do not open and release their seeds prematurely has not been described.

Other strategies to alleviate pod shattering include the use of chemicals such as pod sealants or mechanical techniques such as swathing to reduce weather stimulated shattering.

Swathing can reduce shattering losses because it causes the seed to mature more uniformly. Unfortunately swathing timing is a real problem, in fact late swathing results in increased losses due to shattering, and early swathing results in decreased seed size and more immature seed. Moreover many growers can seed about three times as many acres in a day as they can swath, making timing management a challenge.

Pod sealants works by forming a lattice or a mesh over the fragile pods, which prevents the pod from splitting when maturing or during dry or rainy conditions. This brings more pods to physiologically mature and increase in size, which results in increased yields and virtually no green seed, and allows straight cutting. First pod sealants metioned in the art are based on pine resin. US 4,447,984 describes the use, as pod sealant agent, of a group of pinolene products based on di-1-p-menthene. These products, which contain di-1-p-menthene and certain of its polymers, further polymerize to form a film, and such further polymerization may take place or even be induced before application. Other monoterpenes of formula C₁₀H₁₆, which correspond to two isoprene units, can also be used.

Unfortunately pinolenes are naturally occurring substances and are both expensive and in short supply in relation to possible agricultural needs. Moreover this kind of products are very toxic to fish and aquatic organism and must be handled with some precaution to avoid skin irritation and dermatitis caused by frequent usage.

GB 2,073,590 provides a process of reducing seed loss from crops of oil-seed rape desiccated by treatment with Diquat which comprises applying the Diquat in admixture with di-1-p-menthene.

We have now surprisingly discovered that a pod sealant composition, based on a low viscosity carboxymethyl cellulose (LV-CMC) alone, can be utilized with excellent sealing performances, without the above-identified disadvantages associated with usage of the commonly used pod sealant agents. Moreover LV-CMC does not affect the speed of desiccation and has no adverse effects on seed quality or seed maturity.

In the context of the present disclosure, the abbreviation CMC stands for carboxymethyl cellulose as well as for salts of carboxymethyl cellulose, for example sodium carboxymethyl cellulose and with the expression "low viscosity carboxymethyl cellulose" we mean carboxymethyl cellulose having an average degree of polymerization (DP) below 1500.

The LV-CMC may be also depolymerised CMC. According to the invention, the expression "depolymerized CMC" defines a carboxymethyl cellulose whose DP has been reduced below 400 through a chemical, enzymatic, or physical treatment or a combination of these treatments.

According to the invention the DP of CMC may be determined from the average molecular weight of the polymer obtained by size exclusion chromatography (SEC) coupled to a multiangle laser light-scattering photometer (MALLS).

### Disclosure of the Invention

It is therefore an object of the present invention to provide a method for preventing the premature opening of seed pods as defined in claim 1, comprising the following steps:
i) preparing an aqueous pod sealant composition comprising from 0.035 to 1.2 % weight/volume (wt/v) of a low viscosity carboxymethyl cellulose (hereinafter LV-CMC) with a DP <1500, preferably a depolymerized carboxymethyl cellulose, alone as pod sealant active ingredient,
ii) spraying from 60 to 500 l/ha of said composition on pod-bearing crops within a month prior to harvesting.

In an another aspect, the present invention is directed to the use of a low viscosity CMC as defined in claim 10. The characteristics and advantages related to the use of a low viscosity carboxymethyl cellulose as pod sealant agent according to the present invention are illustrated in detail in the following description.

### Detailed Description of the Invention

According to the invention, a preferred low viscosity carboxymethyl cellulose has a degree of polymerization below 1000, a Brookfield viscosity measured at 20 rpm and 20°C in water solution at 2.0 %wt concentration below 500 mPa∗s, preferably below 500 mPa∗s at 4.0 %wt concentration. Advantageously, the LV-CMC has a degree of substitution ranging from 0.4 to 1.6, more preferably from 0.6 to 1.2.

The expression "degree of substitution" (DS) means the number of carboxymethyl groups for each anhydroglycosidic unit of the cellulose; DS can be measured by ¹H-NMR.

The most preferred LV-CMC is a depolymerized carboxymethyl cellulose with a DP below 400. Many methods useful for the depolymerisation of carboxymethyl cellulose are known; we cite, by way of example, those reported in :
- EP 382,577, where enzymatic hydrolysed from cellulose derivative are described;
- GB 2,281,073 , where the procedure for obtaining solutions of low viscosity carboxymethyl cellulose from the dissolution of solid mixtures of carboxymethyl cellulose and enzymes is described;
- EP 465,992, where a procedure for the depolymerisation of cellulose ethers with hydrogen peroxide in water is described;
- EP 708,113, where the obtainment of low molecular weight cellulose ethers by irradiation is described;
- WO/2005/012540, which describes a procedure for the enzymatic depolymerisation of medium viscosity carboxymethyl cellulose in the form of dispersed powder in a hydro-alcoholic heterogeneous medium;

Practically all these methods are utilizable for the preparation of a depolymerized CMC suitable for the pod sealant composition according to the invention. The CMCs obtained from a enzymatic depolymerisation process are the preferred choice.

According to an aspect of the present invention, the depolymerized CMC has a DS comprised between 0.4 and 1.6, preferably between 0.6 and 1.2 and a Brookfield viscosity at 35 % wt, 20 rpm and 20°C, comprised between 1000 and 6000 mPa∗s, preferably between 2000 and 5000 mPa∗s.

Preferably the LV-CMC of the invention is added at a concentration from 0.1 to 0.35 % wt/v in the pod sealant composition.

The LV-CMC of the invention can be incorporated into the pod sealant composition as solid or can be added as a concentrated liquid form. Generally, it is preferred to add the depolymerized CMC of the invention as a concentrated liquid solution or dispersion.

According to another preferred aspect of the invention, the concentrated liquid solution/dispersion of depolymerized CMC contains from 20 to 40 % wt of depolymerised CMC, preferably from 25 to 35 % wt.

The here disclosed pod sealant composition for reducing seed loss may consists of water and LV-CMC alone as the pod sealant active agent. Conveniently, it may also contain agrochemical active ingredients such as desiccants, which is a substance that promote the drying out of the plant to facilitate harvesting, or herbicides, to control weeds, fungicides, insecticides, fertilizers, micronutrients or mixture thereof. Preferred agrochemical active ingredients are Glyphosate and Diquat salts, Tebuconazole, fertilizers and micronutrients or mixture thereof.

The pod sealant composition of the invention can be applied by spraying on any kind of pod-bearing crops such as: legume crops, including lentils, peas, beans, sesame, linseed etc; brassica seed crops, including oilseed rape, canola, turnips etc; soybeans. Preferably the pod sealant composition is applied on oilseed rape and in particular on canola.

The pod sealant composition can be sprayed within about a month, preferably within two week, prior the full ripening depending on the crop variety and the presence of desiccant in the tank mix. The composition is sprayed on the crops by means of conventional techniques such as aerial or high-clearance ground applications.

The application of disclosed pod sealant composition is recommended at a dose rate of between 60 to 500 l/ha, preferably from 200 to 300 l/ha. The higher dose rates should be used in dense crops.

The application of the pod sealant of the invention can be combined with swathing, but the maximum results will be obtained by allowing the pod-bearing crops to reach their full maturity and carrying out straight cutting or direct combining.

The following experimental data show the comparison between the pod sealing composition of the invention and well known pod sealing compositions.

### Examples

A water solution of depolymerized CMC (D-CMC1), 35 % wt active matter, viscosity 3500 mPa∗s, was diluted to 0.12 % active weight/volume with water and applied as pod sealant.

The pod sealant composition of the invention was compared with three other pod sealants compositions, which are recommended for the treatment of oilseed rape before harvesting and are based on:
• Nu Film, commercialized by Miller Chemical Co. Hanover, PA 17331 - USA
• Elastiq, commercialized by Chemtura Middlebury, Connecticut 06749 - USA
• Alpha Clay, commercialized by Alpha Chemical Group, KYIV, 03150, Ukraine.

Pod sealants were applied with the aid of a tractor sprayer, with the standard application of the pod sealant diluted solution of 300 l/ha. The harvest of the plants of oilseed rape was carried out by mechanical combining. The experimental conditions for these tests were the closest to the normal production conditions.

Table 1 reports the results relating to harvesting of oilseed rape reared without fertilizer. Table 2 reports the results relating to harvesting of oilseed rape reared with N60P60K60 fertilizer.

**Table 1**

| Pod Sealant Composition (dose) | Productivity (t/ha) | Difference from blank (t/ha) | Value of the preserved crop (std value 350$/t) |
|---|---|---|---|
| None* | 0.63 | | |
| Nu Film 17 (1 l/ha)** | 0.89 | 0.26 | 91 |
| Elastiq (1 l/ha)** | 1.16 | 0.53 | 186 |
| Alpha Clay (1,5 l/ha)** | 1.29 | 0.66 | 231 |
| D-CMC1 (1 l/ha) | 1.85 | 1.22 | 427 |

| | | | |
|---|---|---|---|
| *Blank ** Comparative pod sealants | | | |

The foregoing data demonstrate that application of the pod sealant composition of the invention can reduce seed loss due to pod-shattering to a marked extent and with better results than corresponding alternatives on the market.

**Table 2**

| Pod Sealant Composition (dose) | Productivity (t/ha) | Difference from blank (t/ha) | Value of the preserved crop (std value 350$/t) |
|---|---|---|---|
| None* | 1.07 | | |
| Nu Film 17 (1 l/ha)** | 1.19 | 0.12 | 42 |
| Elastiq (1 l/ha)** | 1.16 | 0.09 | 32 |
| Alpha Clay (1,5 l/ha)** | 1.48 | 0.41 | 144 |
| D-CMC1 (1 l/ha) | 1.71 | 0.64 | 224 |

| | | | |
|---|---|---|---|
| *Blank ** Comparative pod sealants | | | |

## Claims

1. Method for preventing the premature opening of seed pods comprising the following steps:
i) preparing a aqueous pod sealant composition comprising from 0.035 to 1.2 % weight/volume (wt/v) of a carboxymethyl cellulose (LV-CMC) with a DP <1500 alone as pod sealant active agent,
ii) spraying from 60 to 500 l/ha of said composition on pod-bearing crops within a month prior to harvesting.

2. The method of claim 1 wherein the LV- CMC has a DP <1000.

3. The method of claim 2 wherein the LV- CMC is a depolymerized carboxymethyl cellulose (D-CMC) with a DP <400.

4. The method of claim 1 wherein the aqueous pod sealant composition comprises from 0.1 to 0.35 % wt/v of LV- CMC.

5. The method of claim 1 wherein said aqueous pod sealant composition further comprises, as agrochemical active ingredients, desiccants, herbicides, insecticides, fungicides, fertilizers, micronutrients or a mixture thereof.

6. The method of claim 5 wherein said aqueous pod sealant composition comprises, as agrochemical active ingredients, a Glyphosate salt, a Diquat salt, Tebuconazole, a fertilizer or a mixture thereof.

7. The method according to claim 1 wherein said pod-bearing crop is chosen in the group consisting of legume crops, brassica seed crops and soybeans.

8. The method according to claim 7 wherein said pod-bearing crop is oilseed rape.

9. The method according to claim 1 wherein the aqueous pod sealant composition is sprayed within two weeks prior to harvesting.

10. Use of a carboxymethyl cellulose (LV-CMC) with a DP <1500 alone as pod sealant.

11. The use of claim 10 wherein the LV-CMC has a DP <1000 and a Brookfield viscosity 2% wt in water, 20 rpm and 20°C below 500 mPa∗s.

12. The use of claim 11 wherein the LV-CMC is a depolymerized carboxymethyl cellulose with a DP <400 and a Brookfield viscosity at 35 % wt, 20 rpm and 20°C between 1000 and 6000 mPa∗s.

## Patentansprüche

1. Verfahren zum Verhindern des vorzeitigen Öffnens von Samenkapseln bzw. -hülsen, das folgende Schritte umfasst:
i) Herstellen einer wässrigen Kapsel- bzw. Hülsenversiegelungszusammensetzung, die 0,035 bis 1,2 % (Gewicht/Volumen, w/v) einer Carboxymethylcellulose (LV-CMC) mit einem DP < 1500 allein als Kapsel- bzw. Hülsenversiegelungswirkstoff umfasst,
ii) Aufsprühen von 60 bis 500 l/ha dieser Zusammensetzung auf Kapseln bzw. Hülsen tragende Pflanzen innerhalb eines Monats vor der Ernte.

2. Verfahren nach Anspruch 1, wobei die LV-CMC einen DP < 1000 hat.

3. Verfahren nach Anspruch 2, wobei die LV-CMC eine depolymerisierte Carboxymethylcellulose (D-CMC) mit einem DP < 400 ist.

4. Verfahren nach Anspruch 1, wobei die wässrige Kapsel- bzw. Hülsenversiegelungszusammensetzung 0,1 bis 0,35 % (w/v) LV-CMC umfasst.

5. Verfahren nach Anspruch 1, wobei die wässrige Kapsel- bzw. Hülsenversiegelungszusammensetzung ferner als agrochemische Wirkstoffe Trockenmittel, Herbizide, Insektizide, Fungizide, Düngemittel, Mikronährstoffe oder eine Mischung davon enthält.

6. Verfahren nach Anspruch 5, wobei die wässrige Kapseln- bzw. Hülsenversiegelungszusammensetzung als agrochemische Wirkstoffe ein Glyphosat-Salz, ein Diquat-Salz, Tebuconazol, ein Düngemittel oder eine Mischung davon umfasst.

7. Verfahren nach Aspruch 1. wobei die Kapseln bzw. Hülsen tragende Pflanze ausgewählt ist aus der Gruppe bestehend aus Leguminosen, Brassica-Pflanzen und Sojabohnen.

8. Verfahren nach Anspruch 7, wobei die Kapseln bzw. Hülsen tragende Pflanze Raps Ist.

9. Verfahren nach Anspruch 1, wobei die wässrige Kapsel- bzw. Hülsenversiegelungszusammensetzung innerhalb von zwei Wochen vor der Ernte versprüht wird.

10. Verwendung einer Carboxymethylcellulose (LV-CMC) mit einem DP < 1500 allein als Kapsel- bzw. Hülsenversiegelungsmittel.

11. Verwendung nach Anspruch 10, wobei der LV-CMC einen DP < 1000 und eine Brookfield-Viskosität bei 2 Ges.-% in Wasser, 20 U/min und 20°C unter 500 mPa.s hat.

12. Verwendung nach Anspruch 11, wobei die LV-CMC eine depolymerisierte Carboxymethylcellulose mit einem DP < 400 und einer Brookfield-Viskosität bei 35 Gew.-%, 20 U/min und 20°C zwischen 1000 und 6000 mPa.s ist.

## Revendications

1. Procédé pour empêcher l'ouverture prématurée de gousses, comprenant les étapes suivantes : i) préparation d'une composition aqueuse de scellement pour gousses comprenant de 0,035 à 1,2 % en poids/volume (p/v) d'une carboxyméthylcellulose (LV-CMC) ayant une valeur DP < 1500 seule en tant qu'agent actif de scellement pour gousses, ii) pulvérisation de 60 à 500 l/ha de ladite composition sur des cultures à gousses dans le mois précédant la récolte.

2. Procédé selon la revendication 1, dans lequel la LV-CMC a une valeur DP < 1000.

3. Procédé selon la revendication 2, dans lequel la LV-CMC est une carboxyméthylcellulose dépolymérisée (D-CMC) ayant une valeur DP < 400.

4. Procédé selon la revendication 1, dans lequel la composition aqueuse de scellement pour gousses comprend de 0,1 à 0,35 % p/v de LV-CMC.

5. Procédé selon la revendication 1, dans lequel ladite composition aqueuse de scellement pour gousses comprend en outre, à titre d'agents actifs agrochimiques, des siccatifs, des herbicides, des insecticides, des fongicides, des fertilisants, des micronutriments ou un mélange de ceux-ci.

6. Procédé selon la revendication 5, dans lequel ladite composition aqueuse de scellement pour gousses comprend, à titre d'agents actifs agrochimiques, un sel glyphosate, un sel diquat, du tébuconazole, un fertilisant ou un mélange de ceux-ci.

7. Procédé selon la revendication 1, dans lequel ladite culture à gousses est choisie dans le groupe constitué par les cultures de légumineuses, les cultures de graines de brassicacées et les sojas.

8. Procédé selon la revendication 7, dans lequel ladite culture à gousses est le colza à huile.

9. Procédé selon la revendication 1, dans lequel la composition aqueuse de scellement pour gousses est pulvérisée dans les deux semaines précédant la récolte.

10. Utilisation d'une carboxyméthylcellulose (LV-CMC) ayant une valeur DP < 1500 seule en tant qu'agent de scellement pour gousses.

11. Utilisation selon la revendication 10, dans laquelle la LV-CMC a une valeur DP < 1000 et une viscosité Brookfiold, à 2 % en poids dans l'eau, 20 t/min et 20°C, inférieure à 500 mPa·s.

12. Utilisation selon la revendication 11, dans laquelle la LV-CMC est une carboxyméthylcellulose dépolymérisée ayant une valeur DP < 400 et une viscosité Brookfield, à 35 % en poids, 20 t/min et 20°C, comprise entre 1000 et 6000 mPa·s.
